(19) **Europäisches Patentamt / European Patent Office / Office européen des brevets**

(11) **EP 2 699 032 B1**

(12) **FASCICULE DE BREVET EUROPEEN**

(45) Date de publication et mention de la délivrance du brevet:
**04.03.2015  Bulletin 2015/10**

(51) Int Cl.:
***H04W 12/06*** *(2009.01)*   ***H04L 29/06*** *(2006.01)*

(21) Numéro de dépôt: **13004004.1**

(22) Date de dépôt: **12.08.2013**

(54) **Système de communication téléphonique par VoIP**

VoIP-Telekommunikationssystem

VoIP telephone communication system

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **17.08.2012  FR 1257853**

(43) Date de publication de la demande:
**19.02.2014  Bulletin 2014/08**

(73) Titulaire: **Halys**
**75015 Paris (FR)**

(72) Inventeurs:
- **Henry-Labordere, Arnaud**
  **75007 Paris (FR)**
- **Cruaux, Sébastien**
  **94320 Thiais (FR)**
- **Deviercy, Gilles**
  **78990 Elancourt (FR)**
- **Mathian, Benoît**
  **92100 Boulogne Billancourt (FR)**
- **Braconnier, Thierry**
  **92230 Chatillon (FR)**

(74) Mandataire: **Cabinet HERRBURGER**
**115, Boulevard Haussmann**
**75008 Paris (FR)**

(56) Documents cités:
**WO-A1-2009/103188**

- **KOTULIAK I ET AL: "Provisioning of VoIP Services for Mobile Subscribers Using WiFi Access Network", CONVERGENCE INFORMATION TECHNOLOGY, 2007. INTERNATIONAL CONFERENCE ON, IEEE, PISCATAWAY, NJ, USA, 21 novembre 2007 (2007-11-21), pages 1957-1962, XP031225482, ISBN: 978-0-7695-3038-3**

EP 2 699 032 B1

**Description**

**Domaine de l'invention**

La présente invention se rapporte à un système de communication téléphonique par VoIP d'un réseau à partir d'un terminal (M) sans enregistrement préalable du terminal (M).

**État de la technique**

Pour les accès WiFi, les opérateurs GSM ont introduit depuis 2012, l'authentification par le protocole EAP-SIM. Cependant, ils n'offrent cette possibilité qu'à leurs seuls abonnés disposant d'un forfait « illimité » en WiFi et pour une utilisation « DATA » seule c'est-à-dire de transmission des données, car les opérateurs ne disposent pas de possibilité de gérer des abonnés au volume comme en GSM.

Pour cette même raison, les services vocaux par VoIP ne sont pas ouverts lors des accès à des bornes WiFi par l'authentification selon le protocole EAP-SIM, car cela pourrait revenir pour l'opérateur à ouvrir une technique en concurrence avec son modèle économique et aussi car cela nécessite une authentification supplémentaire.

En effet, les opérateurs ne peuvent pas relier l'authentification de service à celle de la connexion WiFi. Il faut une autre authentification, par exemple par le nom d'utilisateur et un mot de passe qui est indépendante pour le service VoIP car il est impossible d'envoyer des requêtes d'authentification selon le protocole EAP-SIM vers le mobile une fois la connexion IP établie après son authentification. Un serveur de VoIP ne peut pas faire parvenir des requêtes du protocole EAP vers le mobile. Les systèmes de VoIP actuels gratuits ou payants obligent donc leurs utilisateurs à s'enregistrer préalablement sur un serveur dédié et ces systèmes ne permettent des connections qu'entre les utilisateurs d'un même serveur ou service tels que SKYPE, WHAT's APP, VIBER et ce dernier oblige ses utilisateurs à lui donner accès total à leur carnet d'adresses, qu'il utilise comme contrôle de point de liaison entre ses utilisateurs.

Le brevet FR 07 52 608 « Système de terminaisons d'appels vers des numéros de mobiles par IP », A. Henry-Labordère décrit un système de terminaison d'appels par IP permettant de substituer un PC à un mobile GSM, pour émettre des appels et des SMS, mais aussi pour recevoir des appels et des SMS vers le numéro GSM ordinaire sans utiliser un « alias » comme dans le système SKYPE. La sécurisation se fait par un lecteur de carte SIM branché sur la prise USB du PC.

Le procédé d'authentification de l'accès IP à partir de la carte SIM fait partie de l'état de l'art depuis 2006 (RFC 4686). Dans la spécification des cartes SIM, cette possibilité apparaît depuis 2008 seulement où ont été introduits des fichiers spécifiques pour les préférences WLAN (voir 3GPP TS 31.102 Release 6) qui n'existaient pas dans les versions précédentes. Par contre rien n'est conçu pour permettre de relier une authentification réussie à l'autorisation d'utiliser un service VoIP sur cette connexion.

On connaît également selon le document "KOTULIAK I ET AL « Provisioning of VoIP Services for Mobile Subscribers Using WiFi Access Network » CONVERGENCE INFORMATION TECHNOLOGY, 2007. INTERNATIONAL CONFERENCE ON, IEEE, PISCATAWAY, NJ, USA, 21 novembre 2007, pages 1957-1962, XP031225482 » un système de communications téléphoniques par VoIP. Cette communication se fait à partir d'un terminal M d'un réseau sans que ce terminal ne soit préalablement enregistré. Le réseau de l'opérateur comporte un serveur d'authentification SR relié au registre HLR et un serveur VoIP associé au serveur SR. Le serveur SR applique un protocole d'authentification avant de permettre l'accès au service VoIP. Le terminal M, c'est-à-dire le terminal de l'abonné, a une carte à puce avec un logiciel et l'adresse du service VoIP. Le réseau de l'opérateur reçoit la demande d'accès au service VoIP du terminal M et l'authentifie pour lui communiquer une adresse IP auprès du DHCP. Le serveur VoIP demande au serveur SR la confirmation de l'identité du terminal demandeur M et son enregistrement par le serveur SR puis assure le service VoIP. Mais dans ce système, le serveur SIP établit une connexion IP SEC directement avec le terminal VM.

Un autre document WO 2009/103188 décrit un système dans lequel le serveur ISP vérifie l'IMSI qu'il obtient dans la requête d'établissement de la connexion VoIP pour vérifier qu'il correspond à l'IMSI authentifié au préalable par le AAA. Il n'existe pas de concept de triplet IP du point d'accès, IP du terminal, MSISDN enregistré dans le AA ni vérification de ce triplet lors d'une demande d'accès au service VoIP.

Mais ces différentes techniques sont insuffisantes et surtout elles ne permettent pas la communication téléphonique par VoIP sans enregistrement préalable.

**But de l'invention**

La présente invention a pour but de permettre aux abonnés d'un opérateur de téléphonie mobile GSM, 2G, 3G ou 4G et disposant d'un réseau d'accès IP en propre ou avec des accords d'utiliser le service VoIP sans être enregistrés préalablement sur un serveur VoIP spécifique et de pouvoir facturer l'abonné de façon identique (au temps passé) que l'abonne réalise des appels vocaux sur le réseau GSM ou qu'il utilise une connexion Wifi pour des appels vocaux sur IP.

### Exposé et avantages de l'invention

A cet effet, l'invention a pour objet un système de communication téléphonique par VoIP d'un réseau à partir d'un terminal sans enregistrement préalable du terminal dans lequel

A le réseau de l'opérateur comprend

A1 - un serveur d'authentification relié au registre HLR, serveur servant à la fois à l'authentification de la connection IP et l'identification de la session VoIP,

- un serveur VoIP associé au serveur d'authentification,
- le serveur d'authentification appliquant un protocole d'authentification avant d'autoriser le serveur VoIP à permettre à un terminal, l'accès au service VoIP,
- des points d'accès IP,

A2 - un ensemble de terminaux associés au réseau de l'opérateur chaque terminal ayant :

- une carte à puce (SIM) avec un identifiant (IMSI),
- un logiciel supplicant,
- un softphone standard avec l'adresse du serveur de VoIP

B le réseau de l'opérateur est conçu pour appliquer une procédure de communication selon laquelle :

B1 un terminal demandeur d'un accès au service VoIP s'adresse automatiquement :

- au serveur d'authentification pour être authentifié et ensuite obtenir une adresse IP auprès du DHCP, puis
- au serveur VoIP qui s'adresse au serveur d'authentification pour avoir la confirmation de l'identité du terminal demandeur et son enregistrement par le serveur d'authentification puis assure le service VoIP,

B2 le serveur d'authentification utilise un protocole d'authentification pour authentifier le terminal demandeur par des demandes d'éléments d'identité du terminal et leur vérification à l'aide de la base de données (HLR) du réseau,

B3 après confirmation de l'identité et obtention d'une adresse IP provisoire pour le terminal une identité temporaire comprenant :

* l'adresse IP du point d'accès,
* le numéro MSISDN du mobile,
* l'adresse IP attribuée au mobile,

est enregistrée par le serveur d'authentification pour la facturation de la session VoIP demandée,

B4 le serveur VoIP, à la réception de la requête de service VoIP du terminal demandeur s'adresse au serveur d'authentification et lui communique l'identité temporaire du terminal pour que le serveur d'authentification vérifie l'authenticité en comparant l'identité temporaire transmise par le serveur VoIP et l'identité temporaire qu'il a enregistrée et s'il y a concordance, le serveur d'authentification envoie un message d'acceptation au serveur VoIP qui ouvre la session de service VoIP pour le terminal.

Le système de téléphonie par le service VoIP à partir d'un terminal constitué par un téléphone GSM ou un ordinateur (PC), avec la seule identification de la carte SIM, permet à l'abonné du réseau d'utiliser le service VoIP sans avoir à s'enregistrer préalablement ; l'authentification avec sa carte SIM selon l'invention se fait de manière totalement transparente et quasi immédiate au moment où l'abonné (terminal) demande à utiliser le service VoIP. Le terminal demandeur est ainsi identifié et enregistré immédiatement chez son opérateur et en toute liberté sans être limité à des destinataires de ses appels ou de ses SMS qui devraient être eux-mêmes utilisateurs de tel ou tel service VoIP chez cet opérateur.

Le terminal demandeur pourra recevoir des appels et des SMS sur son numéro MSISDN et signer ses appels et ses SMS envoyés avec son MSISDN comme s'il utilisait son GSM.

Le système de communication téléphonique VoIP selon l'invention est parfaitement sécurisé par les protocoles d'authentification et notamment, il interdit tout autre accès IP que celui qui est en cours.

La présente invention permet d'authentifier l'accès au service de VoIP par n'importe quel protocole EAP mettant en oeuvre le serveur d'authentification qui est un serveur Radius (ou serveur AAA) tels que EAP-SIM et EAP-AKA sécurisés par une carte SIM, USIM, etc... dans le terminal tel qu'un PC avec un lecteur de carte SIM ou dans un mobile intelligent. Cette procédure est complètement générale et applicable à toute authentification EAP.

Le service est mis en oeuvre par l'opérateur de réseau qui a la maîtrise :

- du serveur d'authentification, et
- du serveur VoIP qui accède au serveur d'authentification,

L'accès des bornes au serveur d'authentification et au serveur VoIP n'est pas forcément par VPN (réseau privé).

Si l'accès se fait par WiFi, la borne d'accès (PA) doit mettre en oeuvre l'authentification EAP qui dialogue avec le serveur d'authentification.

L'authentification est sécurisée par la carte SIM et seules les cartes SIM de l'opérateur pourront s'authentifier même si l'accès se fait à partir d'une borne publique. Cela est vrai si les points d'accès ont une adresse IP fixe mais également dans le cas des points d'accès publics qui ont une adresse dynamique. Un fraudeur qui tenterait d'utiliser le service de VoIP d'un abonné (terminal) ayant actuellement une authentification validée par le protocole d'authentification, pourrait chercher à maquiller dans le paquet IP, l'adresse IP du point d'accès d'un utilisateur autorisé ainsi que son adresse locale temporaire dans le message SIP qu'il adressait au serveur VoIP. Mais une telle tentative serait vouée à l'échec car la requête ne pourrait obtenir la confirmation du REGISTER du protocole SIP.

En résumé, le terminal a tous les services du GSM bien qu'il soit connecté en IP, et grâce à l'EAP-SIM il n'y a eu aucune administration de personnalisation de la VoIP par l'opérateur.

## Dessins

La présente invention sera décrite ci-après à l'aide d'un exemple de réalisation d'un système de communication téléphonique VoIP pour un terminal à carte SIM sans enregistrement préalable du terminal chez son opérateur, représenté dans les dessins annexés dans lesquels :

- la figure 1 est un schéma général du système de l'invention,
- la figure 2 est un schéma de l'échange des messages entre le terminal, le point d'accès IP, le serveur d'authentification et le serveur VoIP du réseau de l'opérateur,
- la figure 3 est une table explicitant les paramètre de certains messages échangés pour l'authentification et la facturation dans le cas (II) (hôtels, café),
- la figure 4 est une table montrant les paramètres de certains messages échangés pour utiliser le service VoIP,

## Description d'un mode de réalisation de l'invention

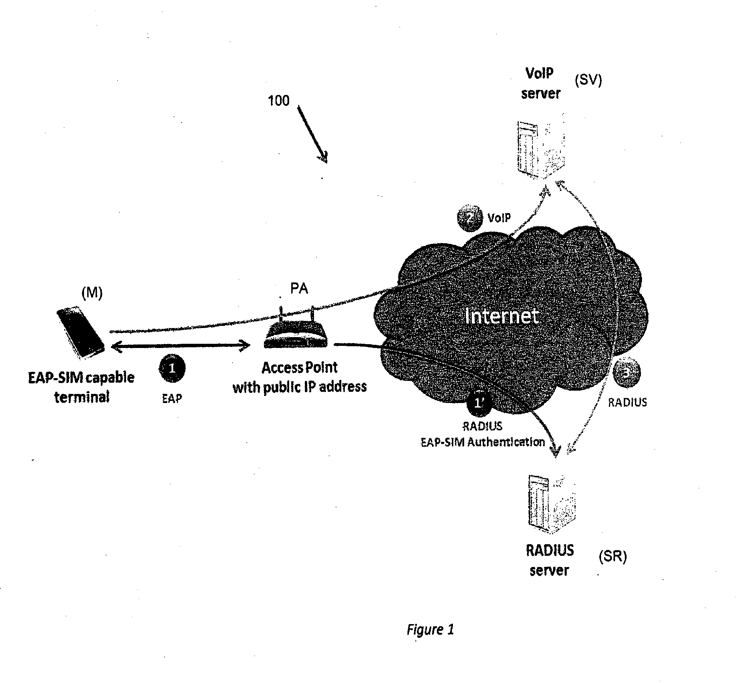

La figure 1 montre schématiquement un système de communication téléphonique par VoIP selon l'invention. Ce système est appliqué au réseau d'un opérateur pour permettre à un terminal (M) d'utiliser le service VoIP sans enregistrement du terminal (M) préalablement à l'envoi de sa demande et pour une opération d'enregistrement particulière.

Le réseau de l'opérateur comporte un serveur d'authentification (SR) et un serveur VoIP associé au serveur d'authentification ainsi qu'un ensemble de terminaux (M) appartenant au réseau de l'opérateur et pouvant bénéficier du service VoIP par l'intermédiaire de leur réseau.

La description du système de communication téléphonique sera faite ci-après en utilisant la terminologie et les acronymes propres à la téléphonie. Les acronymes sont le cas échéant expliqués dans le glossaire.

Le terminal (M) est un mobile ou un ordinateur personnel PC ayant une carte à puce (carte SIM) avec son identifiant IMSI pour le réseau, un logiciel supplicant et un softphone de VoIP.

Dans un souci de simplification, l'expression « terminal (M) » sera utilisée dans la suite.

Le terminal (M) est équipé d'un supplicant ayant l'adresse du serveur d'authentification (SR).

L'accès au réseau pour le terminal (M) se fait par un point d'accès (PA) qui est une borne Wifi pouvant accéder à un serveur DHCP pour attribuer une adresse IP au terminal (M) dans les conditions décrites ensuite.

Le point d'accès (PA) a une adresse publique fixe comme cela est le cas des bornes publiques (cas I) ou une adresse dynamique allouée par un contrôleur comme cela est le cas des accès Wifi dans les hôtels, cafés ou autres lieux publics (cas II). Le (PA) a l'adresse du serveur d'authentification (SR) configurée.

Le réseau de l'opérateur est conçu pour appliquer une procédure de communication entre le terminal (M) qui demande un accès au service VoIP, le serveur d'authentification et le serveur VoIP. Cette procédure de communication prévoit qu'un terminal demandeur (M) s'adresse automatiquement au serveur d'authentification (SR) pour être authentifié puis au serveur VoIP qui s'adresse à son tour au serveur d'authentification (SR) pour avoir la confirmation de l'identité du terminal demandeur (M) pour la facturation de la session VoIP demandée. Puis le serveur VoIP assure le service VoIP.

Le serveur d'authentification (SR) applique le protocole d'authentification Radius ou AAA de sorte que le serveur SR est appelé serveur Radius ou serveur AAA.

Dans un premier temps, le terminal (M) et le point d'accès (PA) négocient le protocole de sécurité pour la liaison. La liaison entre le terminal (M) et le point d'accès se fait par une liaison Wifi 802.1x qui est un standard permettant de réaliser une authentification par contrôle de l'accès réseau utilisant un procédé de chiffrement. Une fois le protocole de sécurité établi pour la transmission de messages entre le terminal (M) et le point d'accès (PA), ce dernier devient en quelque sorte transparent.

Le supplicant s'authentifie auprès du (SR) pour l'accès (IP) et le softphone demande ensuite au serveur VoIP l'accès au service VoIP.

Le serveur d'authentification (SR) est destiné à l'authentification du mobile demandant le service VoIP et le serveur VoIP (SV) auquel le terminal (M) s'adresse, assure les communications VoIP par la voix ou par SMS. Les différentes opérations sont faites par un échange de messages transmettant des éléments d'identité et de contrôle entre le terminal (M) à travers le point d'accès (PA), avec le serveur d'authentification (SR) qui lui-même se renseigne auprès du registre HLR du réseau. Après ces différents contrôles, le serveur d'authentification accepte la demande et établit un identifiant temporaire propre au terminal (M) pour la session VoIP sollicitée. Il enregistre le terminal (M) comme utilisateur du service VoIP de son réseau pour cette session ; cet enregistrement permet la facturation et autorise ainsi l'utilisation du service VoIP lorsqu'à la fin de la phase d'authentification et d'enregistrement, le terminal (M) demande le service VoIP en s'adressant alors au serveur VoIP dont il a l'adresse.

Les échanges résumés ci-dessus entre le terminal (M) et d'abord le serveur d'authentification (SR) puis le serveur VoIP (SV) préalables à l'utilisation du service VoIP sont faits automatiquement sans que l'utilisateur du terminal (M) n'ait à intervenir et sans que le serveur VoIP n'ait de pré-configuration d'utilisateur particulier, ni utilise de nom d'utilisateur ni de mot de passe.

La phase d'authentification consiste pour le serveur d'authentification d'abord à s'assurer de l'identité du terminal demandeur (M) puis de faire compléter cette identité par une adresse IP provisoire qui sera attribuée au terminal (M) pour ensuite composer l'identifiant temporaire (IT) du terminal (M) valable pour la session VoIP sollicitée et enfin enregistrer le terminal (M) pour la facturation de la session sur VoIP.

La phase préliminaire d'authentification correspond à des échanges de messages entre le terminal (M) et le serveur d'authentification (SR) selon un protocole d'authentification, par exemple le protocole EAP jusqu'à l'attribution d'une adresse IP dynamique de durée limitée au terminal (M) par le serveur DHCP.

Le serveur d'authentification (SR) peut alors composer l'identifiant temporaire du terminal (M) comprenant :

- l'adresse IP fixe du point d'accès (PA),
- l'adresse locale dynamique IP du terminal (M),
- le nom MSISDN de l'utilisateur (M).

Dans le cas où le point d'accès (PA) a une adresse dynamique allouée par un contrôleur, on enregistre également l'adresse IP du contrôleur car c'est cette adresse qui apparaîtra dans l'en-tête du paquet IP quand le terminal demandera l'accès au service VoIP par la requête SIP REGISTER. Cette adresse permettra d'identifier la borne dans l'identifiant temporaire (IT).

Avec cet identifiant temporaire (IT) enregistré dans sa base, le serveur d'authentification (SR) enregistre le terminal (M) pour la facturation c'est-à-dire le comptage du temps (ou du volume de données) et libère l'utilisation du service VoIP.

- Le terminal (M) est standard tant du point de vue de l'authentification pour l'accès au réseau IP, notamment par la borne WiFi, mais aussi par un accès filaire ou GSM. La seule configuration dans le terminal (M) est l'adresse du serveur VoIP de l'opérateur et le nom d'utilisateur (MSISDN). Pour recevoir les appels SIP, il faut un nom d'utilisateur, ce qui améliore aussi la sécurité. Il n'y a pas de mot de passe VoIP, ce qui évite d'avoir à en distribuer, ce qui est un avantage caractéristique de l'invention.
- Le serveur VoIP (SV) n'a aucune pré-configuration d'utilisateurs ni « nom d'utilisateur », ni « mot de passe » à la différence des systèmes actuels.

La figure 1 donne le schéma général de l'autorisation d'utiliser la VoIP.

L'étape 1 entre le terminal (M), le Point d'Accès (PA) et le serveur (SR) est l'autorisation de se connecter au réseau. Le Point d'Accès (PA) relaie en 1' le protocole EAP en l'encapsulant dans des messages RADIUS. Mais le serveur (SR) crée selon l'invention un triplet qui va servir à l'authentification VoIP.

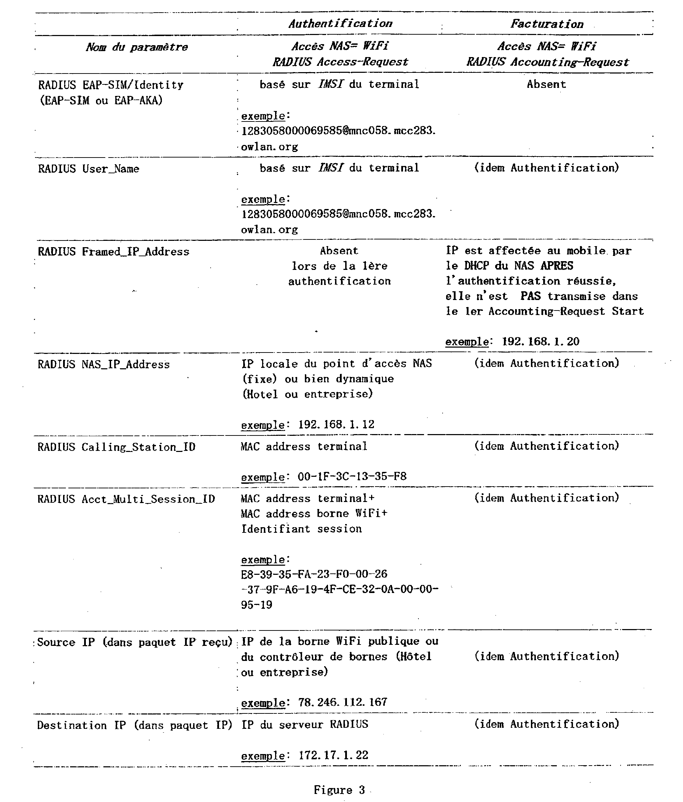

Ultérieurement, à l'étape 2, l'utilisateur fait une requête SIP REGISTER vers le serveur de VoIP. Celui-ci fait un RADIUS Access-Request 3) vers le RADIUS en lui passant les paramètres de la figure 3.

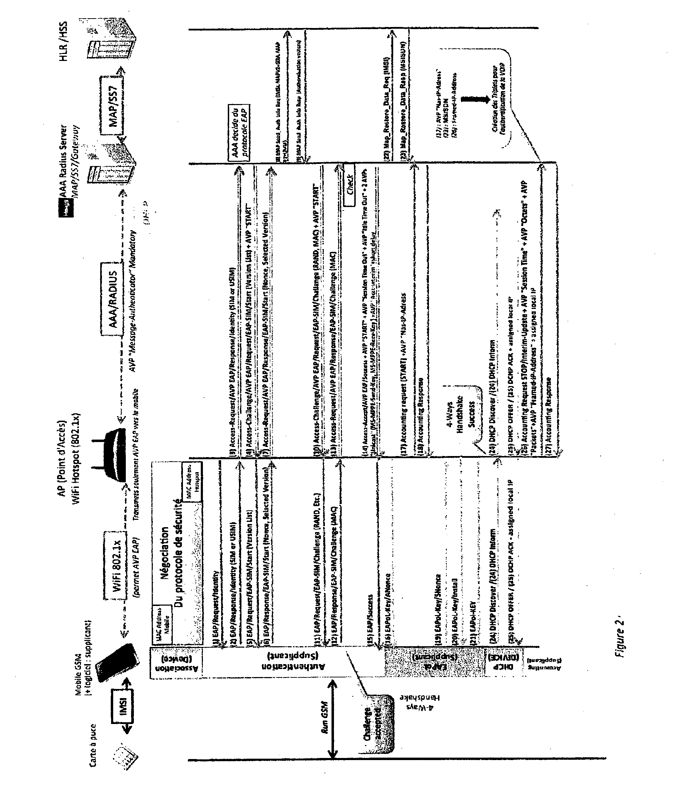

Si la demande est acceptée par le serveur (SR), celui-ci peut, pour le service de réception d'appels et de SMS vers le numéro GSM, effectuer à ce moment, la relocalisation du numéro de mobile par un MAP UPDATE_LOCATION vers le HLR en utilisant l'IMSI (requête 14 et réponse 15 de la figure 2).

La procédure de sécurisation de l'accès au serveur VoIP (SV) selon l'invention sera détaillée ci-après à l'aide du schéma de la figure 2 qui montre, dans sa partie supérieure, la liaison entre les composants pour la procédure d'authentification selon le protocole Radius, détaillée en dessous de cette ligne par les échanges de messages entre les différents composants du système.

La procédure d'authentification détaillée donnée sur la figure 2 applique le protocole EAP-SIM et EAP-AKA. Les titres des messages sont en anglais comme les normes « RFC » qui les définissent. Cette figure montre les points particuliers du serveur RADIUS pour l'invention. Le terminal (« Supplicant ») et le Point d'Accès (« Authenticator ») dialoguent en protocole WiFi 802. 1x par voie radio, le Point d'accès et le serveur Radius (serveur AAA) dialoguent en protocole RADIUS qui encapsule du protocole EAP entre le « supplicant » et le serveur AAA ; le Point d'Accès n'est qu'un relais transparent.

La ligne supérieure montre le terminal (M) qui est ici un mobile GSM équipé d'un logiciel supplicant pour se relier au point d'accès (PA), d'un logiciel softphone pour la téléphonie VoIP et de sa carte SIM. Le terminal (M) a un numéro d'annuaire MSISDN pour son identification et pour recevoir les appels vocaux et les messages SMS ou signer ses appels et ses messages.

Le point d'accès (PA) est le relais qui échange les messages avec le serveur d'authentification (SR) selon le protocole EAP et retransmet les messages vers le terminal (M) ou réémet vers le serveur (SR) les messages reçus du terminal (M). Le protocole EAP est un mécanisme d'identification universel appliqué à l'échange des messages entre le point d'accès (PA) et le serveur (SR).

Le serveur AAA (SR) applique le protocole Radius (ou protocole AAA) qui centralise les données d'authentification pour les contrôles.

Les échanges de messages entre les différentes parties du système sont représentés dans les colonnes verticales, entre :

- le terminal (M) et le point d'accès (PA) (NAS),
- le point d'accès (PA) et le serveur (SR),
- le serveur (SR) et le registre HLR,
- le terminal (M) et le serveur DHCP.

La procédure d'authentification est lancée par le point d'accès (PA) (NAS = PA) s'adressant au serveur AAA (SR) qui accède au registre HLR et aux comptes d'utilisateurs. Les échanges de messages pour l'authentification et l'établissement de l'identifiant temporaire (IT) du terminal (M) seront décrits dans leur ordre d'exécution numéroté sur la figure 2 :

① En réponse à la requête d'accès du terminal (M), le point d'accès (PA) lui retourne une requête d'identité EAP/Request/Identity. Le terminal (M) lit alors le numéro IMSI sur la carte SIM et élabore l' « identité ».

② Le terminal (M) répond en renvoyant son identité SIM/USIM par le message « EAP/Request/Identity SIM ou USIM ».

③ Le point d'accès (PA) transmet cette réponse dans une requête d'accès au serveur AAA (SR) par le message « Access-Request/AVP EAP/Response/Identity (SIM ou USIM) ». Le Point d'Accès encapsule le message EAP/Response/Identity dans un message RADIUS « Access-Request » et le transmet au serveur AAA (SR).

4-13 L'échange se poursuit, le serveur AAA transmettant la clé RAND pour compléter l'authentification par l'envoi de paquets « access challenge » auxquels le terminal (M) répond par des messages « access-request ». Le serveur AAA (SR) et le « supplicant » font un échange pour établir la version de protocole commune. Le supplicant décide et en informe le serveur (étape 6 relayée en 7 vers le serveur et comportant « Selected Version » et un nombre aléatoire « Nonce » décidé par le « supplicant »). Le serveur AAA comporte une interface SS7 avec le HLR de l'utilisateur qui sert à obtenir classiquement des nombres aléatoires RAND et les clés de sécurité SRES et Kc calculés par le registre HLR pour l'IMSI (étapes 8 et 9). Les étapes 10 à 13 servent à fournir ces nombres RAND au « supplicant » de façon à ce qu'il recalcule les clés de sécurité, et à vérifier le résultat. Si l'authentification est réussie, le serveur AAA le confirme au « supplicant » après avoir effectué alors un MAP RESTORE_DATA (14) et (15) qui lui permet d'obtenir le MSISDN de l'utilisateur qui va servir de lien pour sécuriser avec le « User_Name » reçu par le serveur quand l'utilisateur s'enregistre (SIP REGISTER) sur le serveur VoIP.

⑭ Lorsque le serveur AAA (SR) dispose des informations nécessaires, il les vérifie (check) et selon le résultat du contrôle, il rejette l'authentification par un paquet « access-reject » ou valide la requête par le paquet « access-accept » en retournant également un chiffre de codage « UNICAST » de cryptage pour la phase de terminaison de la connexion par une « poignée de mains en quatre temps » entre le terminal (M) et le point d'accès (PA) (échanges de messages 16-19-20-21).

Le message fixe aussi une durée courte pour la durée de validité de cette procédure d'authentification (Acct-Interim short delay).

⑮ A l'issue de l'authentification réussie, le serveur AAA (SR) confirme en envoyant (14) un message EAP/Success vers le Supplicant (15) à travers le Point d'Accès.

Le message RADIUS/ EAP/ Success comporte aussi des clés appelées « Unicast » destinées au Point d'Accès (et non pas au « Supplicant » car celui-ci les calcule de son coté. Elles sont destinés à permettre au Supplicant et au Point d'Accès de chiffrer leur dialogie radio, en commençant à échanger des clés sécurisées (étapes 18 à 21).

⑰ Pendant l'échange, le point d'accès (PA) lance une demande de début de facturation avec la commande : « Accounting request (START) ».

Celle-ci contient le paramètre (AVP) « NAS-IP-Address » qui est l'adresse IP du PA qui fera partie du triplet d'authentification

⑱ Cette requête reçoit la réponse : « Accounting Response ».

**(22-23)** Entretemps, le serveur AAA (SR) a fait une demande de Restore-Data à la base de données HLR en lui communiquant le numéro IMSI du terminal (M), ce qui lui permet de récupérer le numéro MSISDN, qui fera lui aussi partie du triplet d'authentification.

**(24)** En parallèle, le terminal (M) a demandé une adresse provisoire IP au serveur DHCP selon le message « DHCP Discover/24 DHCP inform ».

**(25)** Le serveur DHCP lui renvoie une adresse IP selon le message suivant : « DHCP OFFER/25 DHCP ACK + assigned local IP.

**(26)** Après expiration de la courte période « Acct-Interim » définie par le serveur AAA dans le message (14), une procédure complète de réauthentification est relancée, l'intérêt étant de pouvoir récupérer l'adresse IP locale attribuée au terminal (M), qui est le dernier élément du triplet d'authentification qui sera enregistré dans la base du serveur (SR). En effet, lors de la 1ère authentification, l'IP locale était attribuée à l'étape (25), soit après la fin de la procédure d'authentification (15) et le début de la facturation (17). A la fin de la 2ème authentification, le PA envoie un RADIUS Accounting-Request/Interim-Update contenant le paramètre « Framed-IP-Address » ayant pour valeur l'IP locale du terminal.

**(27)** Le serveur AAA (SR) peut alors établir le triplet constituant l'identifiant temporaire IT du terminal (M), à savoir :

- l'adresse IP du point d'accès « AVP « Nas-IP-Adress »,
- le numéro d'annuaire du terminal (M) « MSISDN »
- L'adresse IP temporaire du terminal (M) « Framed-IP-Adress ».

**De façon plus détaillée, la sécurisation de l'accès au service VoIP par l'*authentification***

Chaque fois que le même terminal (M), s'authentifie sur la même borne, on a bien sûr le même paramètre Acct_Multi_Session_ID. Il peut servir commodément d'identifiant de contexte dans le serveur AAA pour la procédure d'Identification mais il n'est plus disponible dans les messages liés au protocole VoIP fournies par un client VoIP standard.

Une fois la phase d'Authentification réussie, le terminal (M) demande au serveur DHCP une adresse IP locale, qui est notée au passage par la borne, qui envoie par fréquences courtes (ex: toutes les 10 secondes) un message RADIUS « Accounting-Request Start» contenant cette adresse IP locale (paramètre « Framed-IP-Address ») pour dire que l'utilisation commence. Le serveur AAA (SR) note les paramètres identifiants (fonction légale).

La caractéristique de base de l'invention est de

- permettre une session VoIP sur une connexion déjà authentifiée et seulement dans ce cas, c'est-à-dire quand :

    1 « Authentification », est réussie <u>ET</u>
    1 « Accounting-request », est réussi

- créer dans une base un enregistrement accessible par le triplet : IP du Point d'Accès (borne WiFi) ou du contrôleur + Framed-IP-Address du terminal (M) + User-Name

qui sert d'identifiant unique et permet à un serveur VoIP unique de servir plusieurs bornes, les Framed-IP-Address pouvant être les mêmes d'une borne à l'autre.

Cet enregistrement contient aussi :

- l'Acct_Multi_Session_ID
- l'adresse MAC du terminal

et aussi l'IMSI si on est en EAP-SIM, cela aura été nécessaire pour l'authentification et servira pour la VoIP plus loin pour relocaliser et obtenir le numéro MSISDN, mais la seule existence de l'enregistrement suffit à autoriser l'accès au service VoIP qui sera sécurisé.

Toutefois, même si le terminal est éteint ultérieurement, la borne n'émet pas forcément d « Accounting-Request Stop » indiquant au serveur AAA que la connexion IP est coupée. L'invention met en oeuvre un mécanisme de scrutation fréquente d'activité du terminal (message RADIUS « Status-Client » du serveur vers la borne) pour effacer l'enregistrement de la base RADIUS dès que la connexion n'est plus active.

*La sécurisation s'applique également lorsque le terminal veut utiliser le service VoIP :*

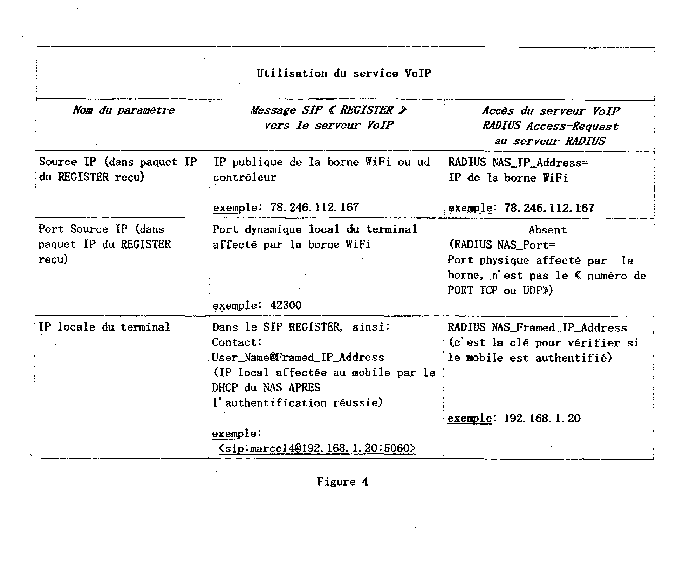

Lors de la connexion SIP (message « REGISTER ») du terminal (M) pour le service de VoIP, le serveur SIP utilise le serveur AAA pour authentifier l'utilisateur. Il envoie un message Access-Request au même serveur AAA avec des paramètres obtenus dans ce message « REGISTER » du terminal (M) en valorisant des paramètres RADIUS pour les contenir (voir figure 4).

Le serveur AAA accède à sa base de données avec le triplet :

- IP (fixe) du Point d'Accès ou du contrôleur (dans le paquet IP)
- IP locale (dynamique) du terminal (dans le SIP REGISTER)
- User_Name (fixe=MSISDN) (dans le SIP REGISTER).

Il ne tient aucun compte du Nom d'utilisateur et du mot de passe, l'authentification préalable et en cours de l'accès IP suffit à valider l'accès au service.

Si l'enregistrement n'existe pas dans la base du serveur AAA (SR), l'accès au service est refusé au terminal (M).

Si l'accès est accepté, le serveur AAA (SR) effectue une mise à jour par la requête MAP UPDATE_LOCATION vers le registre HLR, en utilisant le numéro IMSI du terminal (M) dans sa base, en relocalisant le terminal (M) sur le centre visité MSC/VLR. Il obtient le numéro MSISDN. Ensuite le terminal (M) peut recevoir des appels et des SMS sur son numéro MSISDN et signer ses appels et ses SMS envoyés avec son numéro MSISDN comme s'il utilisait son mobile GSM.

*Sécurité fournie par l'invention pour l'utilisation du service VoIP*

Le but de la sécurité est d'interdire l'usage du service VoIP à partir d'un autre accès IP, notamment WiFi que celui qui est en cours, accès sécurisé par le protocole EAP, notamment EAP-SIM.

L'authentification est sécurisée par la carte SIM et seules des cartes SIM de l'opérateur peuvent s'authentifier, même si l'accès est par des bornes publiques.

On suppose que les Points d'Accès susceptibles d'être utilisés pour tenter une fraude, attribuent seulement des adresses dynamiques. Si l'adresse d'un terminal est fixe, la sécurité est assurée selon ce qui a été décrit ci-dessus.

Un fraudeur peut essayer d'utiliser de différentes façons le service de VoIP du terminal (M) ayant actuellement une authentification valide par EAP-SIM. Les tentatives de fraude pour le service VoIP consistant à maquiller, dans le paquet IP, l'adresse IP du Point d'Accès d'un utilisateur autorisé et son adresse locale temporaire dans le message SIP, sont infructueuses pour obtenir la confirmation du REGISTER du protocole SIP. A titre d'exemple :

Tentative depuis un autre Point d'Accès que le vrai.

Le serveur VoIP après accès au serveur AAA, acceptera le REGISTER si cette adresse locale temporaire correspond à une authentification en cours, et répondra un OK mais la réponse n'arrivera pas au fraudeur, elle ira vers le vrai Point d'Accès, et sera perdue, soit au niveau de celui-ci, si le port d'origine maquillé n'est pas utilisé, soit au niveau du client car la réponse OK reçue n'est pas attendue.

Tentative depuis le même Point d'Accès

Dans ce cas le fraudeur recevra la réponse OK du service VoIP et pourrait utiliser le service en se faisant passer pour une autre identité. La sécurité repose sur le fait que l'adresse locale dynamique d'un terminal ne peut être prévue à un moment donné et encore plus difficilement pour un utilisateur donné, c'est pourquoi le nom de l'utilisateur (dans le message SIP REGISTER) est une des 3 clés d'accès à la base RADIUS d'authentification. En introduisant cette sécurité, l'accès d'authentification à la base de données utilise dans l'invention le triplet mais pas de mot de passe utilisateur :

**IP (fixe) du Point d'Accès + IP (dynamique) du terminal + User_Name(fixe=MSISDN).**

Si l'adresse IP du terminal est fixe, il y aurait un risque sérieux, c'est pourquoi le domaine de l'invention exclut ce cas, mais correspond au plus grand nombre : avions, hôtel, usage privé, etc... pour lequel le risque est faible compte-tenu que l'adresse locale est variable, qu'elle est associée à un numéro d'utilisateur et que la durée de l'adresse locale est limitée.

La détermination par le serveur AAA que l'accès IP est interrompu (il reçoit un « Accounting-Request Stop ») permet de libérer une entrée dans la base mais cela peut se faire aussi sur temporisation d'inactivité par l''envoi régulier de messages RADIUS « Client-Status » si le Point d'Accès supporte ce message optionnel. Il n'y a plus alors de triplet d'authentification dans la base RADIUS et de possibilité d'utiliser le service VoIP.

La figure 4 décrit l'utilisation du service VoIP, le message SIP « REGISTER » et le message Access-Request du serveur VoIP du serveur d'authentification Radius.

**GLOSSAIRE**

AAA (Authentication Autorisation, Accounting) : Authentification, Autorisation, Comptabilité ; le « serveur AAA » est un nom équivalent à « serveur RADIUS »

AP (Access Point) : Point d'Accès ; synonyme de NAS « Network Access System ». Une borne WiFi est un Point d'Accès par radio

DHCP (Dynamic Host Configuration Protocol) : serveur (local, incorporé à une borne d'accès, à un GGSN ou extérieur) qui, interrogé, attribue une adresse IP locale unique et valable pendant la durée de la session

EAP (Extended autorisation Protocol) : protocole d'authentification comportant notamment EAP-SIM et EAP-AKA

HLR (Home Location Register) : Registre de Localisation des abonnés mobiles ; base de données des abonnés mobiles

HPLMN (Home Public Mobile Network) : réseau GSM dans lequel résident les informations de profil de l'abonné ; réseau de l'opérateur

IMSI (International Mobile Subscriber Identity) : numéro d'abonné dans la carte SIM, indépendant du MSISDN de l'abonné. Il est reçu dans un message SMS-MT

SMS-MT (SMS Mobile Terminated) : SMS reçu par le mobile

« MAC Address » : Identifiant unique attribué à tous les équipements pouvant se connecter à un accès Ethernet et donc ensuite à un accès Internet et aux points d'accès

MAP (Mobile Application Part) : protocole GSM pour la transmission de signalisation et messages

MSISDN : Numéro habituel de Mobile/numéro « d'annuaire »

NAS ou AP (Network Access Server) ou (Access Point) : point d'accès au réseau Internet, une borne WiFi par exemple

RADIUS : protocole (Authentication, Autorisation, Accounting) (AAA)

SS7 (Signalling System N°7) : réseau de signalisation mondial pour la transmission de messages surtout entre opérateurs de mobiles

SIP : Protocole pour le service VoIP entre un client, un mandataire et un serveur. Notamment, la requête SIP REGISTER sert à enregistrer le terminal après son authentification

Softphone : Logiciel dans le terminal du client permettant de faire des appels et des messages sur une connexion IP

Smarphone : Téléphone « Intelligent » capable de charger de nombreuses applications

SSID : (Service Set Identifier) : identité d'un Point d'Accès diffusé par voie Radio WiFi vers les terminaux

USB : Interface normalisée pour brancher un périphérique sur un ordinateur. Ce périphérique peut être un lecteur de carte SIM standard pour lire le contenu de la carte et d'exécuter des commandes standard, notamment RUN GSM qui sert à authentifier la carte par rapport au registre HLR

VLR (Vistor's Location Register) : registre de la cellule visitée par le terminal

VoIP (Voix sur IP) : service de téléphonie sur Internet comprenant voix et SMS

## Revendications

1. Système de communication téléphonique par VoIP d'un réseau à partir d'un terminal (M) sans enregistrement préalable du terminal (M) dans lequel

    A le réseau de l'opérateur comprend

        A1 - un serveur d'authentification (SR) relié au registre HLR, serveur servant à la fois à l'authentification de la connection IP et l'identification de la session VoIP,

            - un serveur VoIP associé au serveur d'authentification (SR),
            - le serveur d'authentification (SR) appliquant un protocole d'authentification avant d'autoriser le serveur VoIP à permettre à un terminal (M), l'accès au service VoIP,
            - des points d'accès IP

        A2 - un ensemble de terminaux (M) associés au réseau de l'opérateur
        chaque terminal (M) ayant :

            - une carte à puce (SIM) avec un identifiant (IMSI),
            - un logiciel supplicant avec l'adresse du serveur (SR) du réseau,

- un softphone standard avec l'adresse du service VoIP

B le réseau de l'opérateur est conçu pour appliquer une procédure de communication selon laquelle :

B1 un terminal demandeur (M) d'un accès au service VoIP s'adresse automatiquement :

- au serveur d'authentification (SR) pour être authentifié et ensuite obtenir une adresse IP auprès du DHCP, puis
- au serveur VoIP qui s'adresse au serveur d'authentification (SR) pour avoir la confirmation de l'identité du terminal demandeur (M) et son enregistrement par le serveur d'authentification (SR) puis assure le service VoIP,

B2 le serveur d'authentification (SR) utilise un protocole d'authentification pour au thentifier le terminal demandeur (M) par des demandes d'éléments d'identité du terminal (M) et leur vérification à l'aide de la base de données (HRL) du réseau,
B3 après confirmation de l'identité et obtention d'une adresse IP provisoire pour le terminal (M) une identité temporaire (IT) comprenant :

\* l'adresse IP du point d'accès (PA),
\* le numéro MSISDN du mobile (M),
\* l'adresse IP attribuée au mobile (M),

est enregistrée par le serveur d'authentification SR) pour la facturation de la session VoIP demandée,
B4 le serveur VoIP, à la réception de la requête de service VoIP du terminal demandeur (M) s'adresse au serveur d'authentification (SR) et lui communique l'identité temporaire (IT) du terminal (M) pour que le serveur d'authentification (SR) vérifie l'authenticité en comparant l'identité temporaire (IT) transmise par le serveur VoIP et l'identité temporaire qu'il a enregistrée et s'il y a concordance, le serveur d'authentification (SR) envoie un message d'acceptation au serveur VoIP qui ouvre la session de service VoIP pour le terminal (M).

2. Système selon la revendication 1,
   **caractérisé en ce que**
   le serveur d'authentification (SR) est un serveur Radius appliquant le protocole d'authentification Radius.

3. Système selon la revendication 1,
   **caractérisé en ce que**
   les échanges avec le serveur d'authentification (SR) se font selon le protocole EAP, EAP-SIM ou EAP-AKA.

**Patentansprüche**

1. System zur VoIP-Telefonkommunikation in einem Netz ausgehend von einem Endgerät (M) ohne vorherige Registrierung des Endgeräts (M), wobei

   A das Netz des Betreibers Folgendes umfasst:

   A1 - einen Authentifizierungsserver (SR), der mit dem HLR-Register verbunden ist,
   wobei der Server gleichzeitig zur Authentifizierung der IP-Verbindung und zur Identifizierung der VoIP-Sitzung dient,

   - einen dem Authentifizierungsserver (SR) zugeordneten VoIP-Server,
   - wobei der Authentifizierungsserver (SR) ein Authentifizierungsprotokoll anwendet, bevor er den VoIP-Server ermächtigt, einem Endgerät (M) Zugang zum VoIP-Dienst zu gewähren,
   - IP-Zugriffspunkte,

   A2 - eine Gruppe von Endgeräten (M), die dem Netz des Betreibers zugeordnet sind,
   wobei jedes Endgerät (M) Folgendes umfasst:

- eine Chipkarte (SIM) mit einer Kennung (IMSI),
- eine Supplikant-Software mit der Adresse des Servers (SR) des Netzes,
- ein Standard-Softphone mit der Adresse des VoIP-Dienstes,

B das Netz des Betreibers dafür ausgelegt ist, ein Kommunikationsverfahren anzuwenden, bei dem:

B1 ein Endgerät (M), das um Zugang zum VoIP-Dienst anfragt, sich automatisch an Folgendes wendet:

- an den Authentifizierungsserver (SR), um authentifiziert zu werden und beim DHCP-Server eine IP-Adresse zu erhalten, und anschließend
- an den VoIP-Server, der sich an den Authentifizierungsserver (SR) wendet, um eine Bestätigung bezüglich der Identität des anfragenden Endgeräts (M) und seiner Registrierung durch den Authentifizierungsserver (SR) zu erhalten, und der anschließend den VoIP-Dienst gewährleistet,

B2 der Authentifizierungsserver (SR) ein Authentifizierungsprotokoll verwendet, um das anfragende Endgerät (M) zu identifizieren, indem er Identitätselemente des Endgeräts (M) abfragt und sie mithilfe der Datenbank (HRL) des Netzes überprüft, B3 nach der Bestätigung der Identität und dem Erhalt einer vorläufigen IP-Adresse für
das Endgerät (M) eine temporäre Identität, die

* die IP-Adresse des Zugangspunkts (PA),
* die MSISDN-Nummer des Mobilgeräts (M),
* die dem Mobilgerät (M) zugeteilte IP-Adresse

umfasst, vom Authentifizierungsserver (SR) zur Fakturierung der beantragten VoIPSitzung gespeichert wird,
B4 sich der VoIP-Server beim Erhalt der Anfrage seitens des um einen VoIP-Dienst anfragenden Endgeräts (M) an den Authentifizierungsserver (SR) wendet und ihm die temporäre Identität (IT) des Endgeräts (M) mitteilt, damit der Authentifizierungsserver (SR) die Authentizität überprüfen kann, indem er die vom VoIP-Server übermittelte temporäre Identität (IT) mit jener temporären Identität vergleicht, die er gespeichert hat, wobei im Fall einer Übereinstimmung der Authentifizierungsserver (SR) eine Akzeptanznachricht an den VoIP-Server sendet, der die VoIP-Sitzung für das Endgerät (M) eröffnet.

**2.** System nach Anspruch 1,
**dadurch gekennzeichnet, dass**
der Authentifizierungsserver (SR) ein Radius-Server ist, der das Authentifizierungsprotokoll Radius anwendet.

**3.** System nach Anspruch 1,
**dadurch gekennzeichnet, dass**
der Austausch mit dem Authentifizierungsserver (SR) nach dem Protokoll EAP, EAP-SIM oder EAP-AKA erfolgt.

**Claims**

**1.** VoIP telephone communication system of a network starting from a terminal (M) without prior registration of the terminal (M), wherein

A the operator network comprises

A1 - an authentication server (SR) connected to the HLR register, which server serves both to authenticate the IP connection and to identify the VoIP session,

- a VoIP server associated with the authentication server (SR),
- the authentication server (SR) applying an authentication protocol before authorising the VoIP server to allow a terminal (M) access to the VoIP service,
- access points (IP),

A2 - a set of terminals (M) associated with the operator network, each terminal (M) having:

- a smart card (SIM) with an identifier (IMSI),
- supplicant software with the address of the server (SR) of the network,
- a standard softphone with the VoIP service address,

B the operator network is designed to apply a communication procedure according to which:

B1 a calling terminal (M) for access to the VoIP service automatically addresses:

- the authentication server (SR) in order to be authenticated and subsequently obtain an IP address from the DHCP, and then
- the VoIP server, which addresses the authentication server (SR) in order to receive confirmation of the identity of the calling terminal (M) and its registration by the authentication server (SR) and then provide the VoIP service,

B2 the authentication server (SR) uses an authentication protocol to authenticate the calling terminal (M) by requesting identity elements of the terminal (M) and verifying them with the aid of the network database (HRL),

B3 after confirming the identity and obtaining a provisional IP address for the terminal (M), a temporary identity (IT) comprising:

* the IP address of the access point (PA),
* the MSISDN number of the mobile (M),
* the IP address allocated to the mobile (M),

is registered by the authentication server (SR) for billing of the requested VoIP session,

B4 the VoIP server, upon receiving the request for VoIP service from the calling terminal (M), addresses the authentication server (SR) and communicates thereto the temporary identity (IT) of the terminal (M) so that the authentication server (SR) verifies the authenticity by comparing the temporary identity (IT) transmitted by the VoIP server and the temporary identity which it has registered and, if there is concordance, the authentication server (SR) sends an acceptance message to the VoIP server, which opens the VoIP service session for the terminal (M).

2. System according to claim 1,
   **characterised in that**
   the authentication server (SR) is a Radius server which applies the Radius authentication protocol.

3. System according to claim 1,
   **characterised in that**
   the exchanges with the authentication server (SR) take place according to the EAP, EAP-SIM or EAP-AKA protocol.

100

VoIP (SV)
server

(M)

PA

Internet

EAP-SIM capable
terminal

EAP

Access Point
with public IP address

2 VoIP

3

RADIUS

1'

RADIUS
EAP-SIM Authentication

RADIUS (SR)
server

Figure 1

AP (Point d'Accès)
WiFi Hotspot (802.1x)

AAA Radius Server
MAP/SS7/Gateway

HLR /HSS

Carte à puce

Mobile GSM
(+ logiciel : supplicant)

IMSI

WiFi 802.1x
(permet AVP EAP)

Transmets seulement AVP EAP vers le mobile

AAA/RADIUS

AVP "Message-Authenticator" Mandatory

MAP/SS7

**Association (Device)**

MAC Address Mobile

Négociation
Du protocole de sécurité

MAC Address Hotspot

**Authentication (Supplicant)**

Run GSM

Challenge accepted

(1) EAP/Request/Identity

(2) EAP/Response/Identity (SIM or USIM) — (3) Access-Request/AVP EAP/Response/Identity (SIM or USIM)

(5) EAP/Request/EAP-SIM/Start (Version List) — (4) Access-Challenge/AVP EAP/Request/EAP-SIM/Start (Version List) + AVP "START"

(6) EAP/Response/EAP-SIM/Start (Nonce, Selected Version) — (7) Access-Request/AVP EAP/Response/EAP-SIM/Start (Nonce, Selected Version)

AAA decide du protocole EAP

(8) MAP Send_Auth Info Req (IMSI, MAPV2-SIM, MAP...)

(9) MAP Send_Auth Info Resp (Authentication vectors)

(11) EAP/Request/EAP-SIM/Challenge (RAND, Etc.) — (10) Access-Challenge/AVP EAP/Request/EAP-SIM/Challenge (RAND, MAC) + AVP "START"

(12) EAP/Response/EAP-SIM/Challenge (MAC) — (13) Access-Request/AVP EAP/Response/EAP-SIM/Challenge (MAC)

Check

(15) EAP/Success — (14) Access-Accept/AVP EAP/Success + AVP "START" + AVP "Session Time Out" + AVP "Idle Time Out" + 2 AVPs "Unicast" (MS-MPPE-Send-Key, MS-MPPE-Recv-Key) +AVP 'Acct-interim 'short delay

**EAPoL (Supplicant)**

4-Ways Handshake

(16) EAPoL-Key/ANonce

(17) Accounting request (START) +AVP "Nas-IP-Adress

(22) Map_Restore_Data_Req (IMSI)

(23) Map_Restore_Data_Resp (MSISDN)

(18) Accounting Response

(19) EAPoL-Key/SNonce

(20) EAPoL-Key/Install

4-Ways Handshake Success

(17) : AVP "Nas-IP-Adress"
(23) : MSISDN
(26) : Framed-IP-Address

(21) EAPoL-KEY

**DHCP (DEVICE)**

(24) DHCP Discover /(24) DHCP Inform — (24) DHCP Discover /(24) DHCP Inform

Création des Triplets pour l'authentification de la VOIP

(25) DHCP OFFER / (25) DCHP ACK - assigned local IP — (25) DHCP OFFER / (25) DCHP ACK + assigned local IP

**Accounting (Supplicant)**

(26) Accounting Request STOP/Interim-Update + AVP "Session Time" + AVP "Octets" + AVP "Packets"+AVP "Framed-IP-Address" > assigned local IP

(27) Accounting Response

Figure 2

| | Authentification | Facturation |
|---|---|---|
| Nom du paramètre | Accès NAS= WiFi<br>RADIUS Access-Request | Accès NAS= WiFi<br>RADIUS Accounting-Request |
| RADIUS EAP-SIM/Identity<br>(EAP-SIM ou EAP-AKA) | basé sur IMSI du terminal<br><br>exemple:<br>1283058000069585@mnc058.mcc283.<br>owlan.org | Absent |
| RADIUS User_Name | basé sur IMSI du terminal<br><br>exemple:<br>1283058000069585@mnc058.mcc283.<br>owlan.org | (idem Authentification) |
| RADIUS Framed_IP_Address | Absent<br>lors de la 1ère<br>authentification | IP est affectée au mobile par<br>le DHCP du NAS APRES<br>l'authentification réussie,<br>elle n'est PAS transmise dans<br>le 1er Accounting-Request Start<br><br>exemple: 192.168.1.20 |
| RADIUS NAS_IP_Address | IP locale du point d'accès NAS<br>(fixe) ou bien dynamique<br>(Hotel ou entreprise)<br><br>exemple: 192.168.1.12 | (idem Authentification) |
| RADIUS Calling_Station_ID | MAC address terminal<br><br>exemple: 00-1F-3C-13-35-F8 | (idem Authentification) |
| RADIUS Acct_Multi_Session_ID | MAC address terminal+<br>MAC address borne WiFi+<br>Identifiant session<br><br>exemple:<br>E8-39-35-FA-23-F0-00-26<br>-37-9F-A6-19-4F-CE-32-0A-00-00-<br>95-19 | (idem Authentification) |
| Source IP (dans paquet IP reçu) | IP de la borne WiFi publique ou<br>du contrôleur de bornes (Hôtel<br>ou entreprise)<br><br>exemple: 78.246.112.167 | (idem Authentification) |
| Destination IP (dans paquet IP) | IP du serveur RADIUS<br><br>exemple: 172.17.1.22 | (idem Authentification) |

Figure 3

| Utilisation du service VoIP | | |
|---|---|---|
| *Nom du paramètre* | *Message SIP « REGISTER »*<br>*vers le serveur VoIP* | *Accès du serveur VoIP*<br>*RADIUS Access-Request*<br>*au serveur RADIUS* |
| Source IP (dans paquet IP du REGISTER reçu) | IP publique de la borne WiFi ou ud contrôleur<br><br>exemple: 78. 246. 112. 167 | RADIUS NAS_IP_Address=<br>IP de la borne WiFi<br><br>exemple: 78. 246. 112. 167 |
| Port Source IP (dans paquet IP du REGISTER reçu) | Port dynamique **local du terminal** affecté par la borne WiFi<br><br><br><br><br>exemple: 42300 | Absent<br>(RADIUS NAS_Port=<br>Port physique affecté par la borne, n'est pas le « numéro de PORT TCP ou UDP») |
| IP locale du terminal | Dans le SIP REGISTER, ainsi:<br>Contact:<br>User_Name@Framed_IP_Address<br>(IP local affectée au mobile par le DHCP du NAS APRES l'authentification réussie)<br><br>exemple:<br><sip:marcel4@192. 168. 1. 20:5060> | RADIUS NAS_Framed_IP_Address (c'est la clé pour vérifier si le mobile est authentifié)<br><br><br>exemple: 192. 168. 1. 20 |

Figure 4

## RÉFÉRENCES CITÉES DANS LA DESCRIPTION

**Documents brevets cités dans la description**

- FR 0752608

- WO 2009103188 A

**Littérature non-brevet citée dans la description**

- Provisioning of VoIP Services for Mobile Subscribers Using WiFi Access Network. **KOTULIAK I et al.** CONVERGENCE INFORMATION TECHNOLOGY, 2007. INTERNATIONAL CONFERENCE. IEEE, 21 Novembre 2007, 1957-1962